(19) Europäisches Patentamt / European Patent Office / Office européen des brevets

(11) **EP 3 948 432 B1**

(12) **FASCICULE DE BREVET EUROPEEN**

(45) Date de publication et mention
de la délivrance du brevet:
**07.05.2025 Bulletin 2025/19**

(21) Numéro de dépôt: **20713345.5**

(22) Date de dépôt: **30.03.2020**

(51) Classification Internationale des Brevets (IPC):
**G03H 1/22** $^{(2006.01)}$      **G03H 1/02** $^{(2006.01)}$

(52) Classification Coopérative des Brevets (CPC):
**G03H 1/2205;** G03H 2001/0224; G03H 2001/221;
G03H 2223/17; G03H 2225/12

(86) Numéro de dépôt international:
**PCT/EP2020/059007**

(87) Numéro de publication internationale:
**WO 2020/201232 (08.10.2020 Gazette 2020/41)**

(54) **PROCÉDÉ DE CONSTRUCTION D'UN HOLOGRAMME NUMÉRIQUE ET SYSTÈME D'HOLOGRAPHIE NUMÉRIQUE ASSOCIÉ**

VERFAHREN ZUR HERSTELLUNG EINES DIGITALEN HOLOGRAMMS UND ZUGEHÖRIGES DIGITALES HOLOGRAPHISCHES SYSTEM

METHOD FOR CONSTRUCTING A DIGITAL HOLOGRAM AND ASSOCIATED DIGITAL HOLOGRAPHY SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2019 FR 1903649**

(43) Date de publication de la demande:
**09.02.2022 Bulletin 2022/06**

(73) Titulaire: **FONDATION B-COM**
**35510 Cesson-Sévigné (FR)**

(72) Inventeurs:
• **GIOIA, Patrick**
**35530 SERVON-SUR-VILAINE (FR)**

• **GILLES, Antonin**
**35000 RENNES (FR)**

(74) Mandataire: **Jacobacci Coralis Harle**
**32, rue de l'Arcade**
**75008 Paris (FR)**

(56) Documents cités:
**US-A1- 2013 250 049**

• **ANTONIN GILLES ET AL: "Real-time layer-based computer-generated hologram calculation for the Fourier transform optical system", APPLIED OPTICS, vol. 57, no. 29, 10 October 2018 (2018-10-10), US, pages 8508, XP055541857, ISSN: 1559-128X, DOI: 10.1364/AO.57.008508**

**Description**

Domaine technique de l'invention

La présente invention concerne de manière générale le domaine technique de l'holographie numérique.

Elle concerne en particulier un procédé de construction d'un hologramme numérique et un système d'holographie numérique associé.

Etat de la technique

L'holographie numérique vise à reconstituer une scène tridimensionnelle pour un observateur en affichant un hologramme numérique au moyen d'un modulateur de lumière.

Le champ de vision obtenu peut toutefois être limité et trop restreint pour l'application choisie (l'angle d'émission étant directement lié à la densité de pixels du modulateur de lumière).

Afin d'agrandir le champ de vision (ce qui est intéressant en particulier dans le cas de la réalité augmentée où l'on souhaite superposer l'hologramme affiché à l'environnement réel de l'observateur), il a déjà été proposé d'afficher l'hologramme numérique au moyen d'un système d'affichage comprenant un modulateur de lumière produisant un faisceau lumineux et un dispositif optique convergent conçu pour faire converger le faisceau lumineux vers un point focal. On dénomme couramment FTOS (pour *"Fourier Transform Optical System"*) un tel système.

Ainsi, en plaçant l'œil de l'observateur entre le dispositif optique convergent et le point focal (typiquement à proximité du point focal), le champ de vision vu de l'observateur est élargi. US 2013/250049 A1 et "Real-time layer-based computer-generated hologram calculation for the Fourier transform optical system", Antonin Gilles et al. (Applied Optics, vol.57, no.29, 10 october 2018, pp.8508-8517) divulguent des procédés de reconstruction d'un hologramme numérique étant destiné à être affiché au moyen d'un système d'affichage comprenant un modulateur de lumière.

Présentation de l'invention

Dans ce contexte l'invention propose un procédé de construction d'un hologramme numérique représentant une scène et destiné à être affiché au moyen d'un système d'affichage comprenant un modulateur de lumière produisant un faisceau lumineux et un dispositif optique convergent conçu pour faire converger le faisceau lumineux vers un point focal, la scène étant définie par un ensemble d'éléments lumineux, caractérisé en ce qu'il comprend une étape de détermination de valeurs respectivement associées à des pixels de l'hologramme numérique en sommant des contributions lumineuses respectivement produites par des éléments lumineux avec pondération, pour chacune des contributions lumineuses, par un coefficient de correction dépendant de l'aire de l'intersection d'une surface située entre le dispositif optique convergent et le point focal, et d'un pinceau lumineux ayant une ouverture angulaire prédéterminée et transmis à travers le dispositif optique convergent depuis l'élément lumineux produisant la contribution lumineuse concernée.

L'utilisation du coefficient de correction rend possible de tenir compte au préalable (lors de la construction de l'hologramme numérique) du fait que certains rayons lumineux produits par le modulateur de lumière ne sont que partiellement reçus par la pupille de l'observateur (phénomène qui est amplifié du fait de la convergence de ces rayons produite par le dispositif optique convergent). La reproduction de la scène tridimensionnelle par le système d'affichage s'en trouve améliorée.

D'autres caractéristiques non limitatives et avantageuses du produit/procédé conforme à l'invention, prises individuellement ou selon toutes les combinaisons techniquement possibles, sont les suivantes :

- les éléments lumineux sont respectivement situés sur une pluralité de points de la scène ;
- le procédé comprend, pour chaque point de ladite pluralité, une étape de calcul, en fonction de la position du point concerné, du coefficient de correction pondérant les contributions lumineuses produites par l'élément lumineux situé au point concerné ;
- l'étape de détermination de valeurs comprend, pour chaque pixel de l'hologramme numérique, une étape de détermination du champ généré, au niveau du pixel concerné, par un élément lumineux situé à un point donné et une étape de pondération du champ déterminé par le coefficient de correction calculé pour le point donné ;
- les éléments lumineux sont situés dans au moins un plan ;
- l'étape de détermination de valeurs comprend une étape de propagation du champ lumineux d'un premier plan à un second plan adjacent au premier plan, avec application d'un masque matriciel (ou masque de compensation) dont les éléments sont respectivement associés aux différents points du premier plan et ont une valeur dépendant de l'aire de l'intersection de ladite surface et d'un pinceau lumineux ayant l'ouverture angulaire prédéterminée et transmis à travers le dispositif optique convergent depuis le point associé à l'élément concerné ;
- le procédé comprend une étape d'affichage, au moyen du système d'affichage, de l'hologramme numérique construit ;

- le système d'affichage comprend un obturateur interposé entre deux lentilles ;
- l'orientation de l'obturateur est déterminée en fonction de la répartition des éléments lumineux dans des secteurs angulaires définis autour de l'axe du système d'affichage ;
- le champ déterminé est nul si le pinceau lumineux émis par l'élément lumineux situé au point donné avec ladite ouverture angulaire prédéterminée est entièrement intercepté par l'obturateur ;
- les deux lentilles ont une distance focale identique ;
- l'obturateur est séparé de chacune des deux lentilles d'une distance égale à la distance focale ;
- ladite surface est un disque centré sur l'axe optique du dispositif optique convergent ;
- l'ouverture angulaire prédéterminée est l'ouverture angulaire du faisceau lumineux généré par le modulateur de lumière.

L'invention propose également un système d'holographie numérique comprenant un module de construction d'un hologramme numérique représentant une scène et destiné à être affiché au moyen d'un système d'affichage comprenant un modulateur de lumière produisant un faisceau lumineux et un dispositif optique convergent conçu pour faire converger le faisceau lumineux vers un point focal, la scène étant définie par un ensemble d'éléments lumineux, caractérisé en ce que le module de construction est conçu pour déterminer des valeurs respectivement associées à des pixels de l'hologramme numérique en sommant des contributions lumineuses respectivement produites par des éléments lumineux avec pondération, pour chacune des contributions lumineuses, par un coefficient de correction dépendant de l'aire de l'intersection d'une surface située entre le dispositif optique convergent et le point focal, et d'un pinceau lumineux ayant une ouverture angulaire prédéterminée et transmis à travers le dispositif optique convergent depuis l'élément lumineux produisant la contribution lumineuse concernée.

Un tel système d'holographie peut comprendre en outre le système d'affichage précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Description détaillée de l'invention

De plus, diverses autres caractéristiques de l'invention ressortent de la description annexée effectuée en référence aux dessins qui illustrent des formes, non limitatives, de réalisation de l'invention et où :

- la figure 1 représente les éléments principaux d'un système d'holographie numérique tel que proposé par l'invention ;
- la figure 2 est une représentation schématique d'un système d'affichage du système d'holographie numérique de la figure 1 ;
- la figure 3 représente une possibilité de réalisation d'une partie du système d'affichage de la figure 2 ;
- la figure 4 illustre la construction d'un hologramme numérique à partir d'éléments lumineux situés en différents points d'une scène ;
- la figure 5 illustre la construction d'un hologramme numérique à partir d'une répartition d'éléments lumineux dans un ensemble de plans ;
- la figure 6 illustre la détermination d'un coefficient de correction en tenant compte d'un pinceau lumineux se propageant dans le système d'affichage de la figure 2 ; et
- la figure 7 montre l'intersection du pinceau lumineux et d'un disque représentant la pupille d'un utilisateur du système d'affichage.

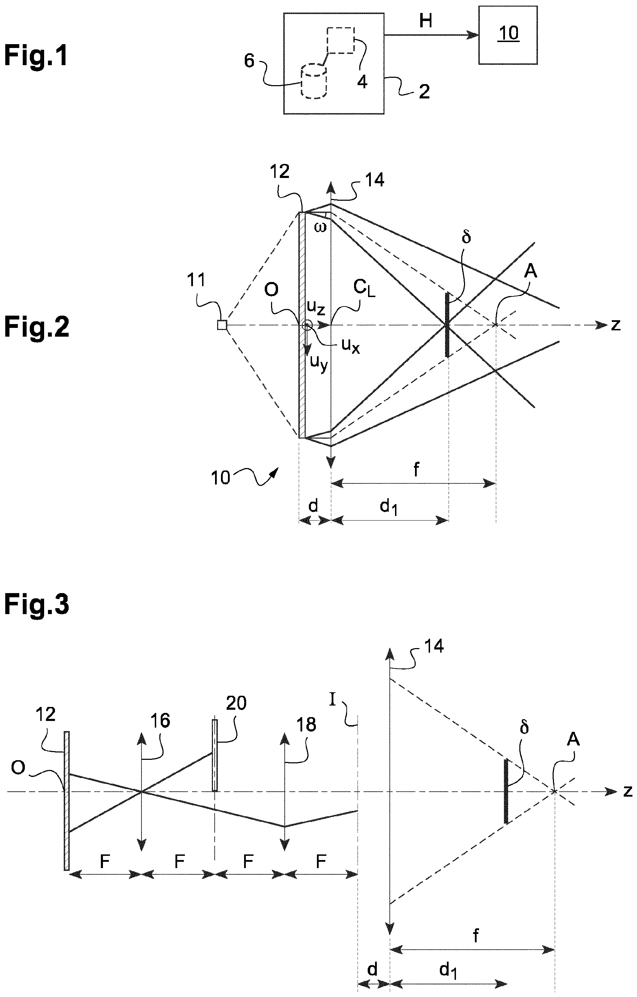

Le système d'holographie numérique décrit dans la suite et représenté sur la figure 1 comprend un module de construction 2 d'un hologramme numérique H et un système d'affichage 10 de l'hologramme numérique H.

Le module de construction 2 comprend ici un processeur 4 et au moins une mémoire 6 (telle qu'une mémoire vive ou une mémoire non-volatile réinscriptible ; il pourrait toutefois s'agir en variante d'un disque dur). Le module de construction 2 est par exemple un ordinateur.

Comme expliqué dans la suite, la mémoire 6 mémorise des données représentatives d'une scène à représenter. La mémoire 6 peut également mémoriser des variables manipulées au cours de la construction de l'hologramme numérique **H,** comme décrit ci-après.

La mémoire 6 mémorise en outre des instructions de programme d'ordinateur conçues, lorsqu'elles sont exécutées par le processeur 4, pour mettre en œuvre les différentes opérations décrites ci-dessous et permettant la construction de l'hologramme numérique H.

Le système d'affichage 10 comprend une source de lumière 11 (ici monochromatique de longueur d'onde $\lambda$), un modulateur de lumière 12 produisant un faisceau lumineux (par modulation de la lumière émise par la source de lumière 11) et un dispositif optique convergent 14 conçu pour faire converger ce faisceau lumineux vers un point focal A, comme décrit ci-dessous en référence à la figure 2.

Selon une première possibilité de réalisation, le module de construction 2 et le système d'affichage 10 peuvent être réunis au sein d'un même dispositif de visualisation holographique. L'hologramme numérique H peut alors être transmis du module de construction 2 au système d'affichage 10 au moyen d'un bus interne de ce dispositif de visualisation holographique.

Selon une seconde possibilité de réalisation, le module de construction 2 et le système d'affichage 10 peuvent être distants l'un de l'autre ; le module de construction 2 étant par exemple localisé dans un serveur distant avec lequel le système d'affichage 10 échange des données via au moins un réseau de communication. Dans ce cas, l'hologramme numérique H peut être transmis (par exemple sous forme de données codées représentant cet hologramme numérique H) via ce réseau de communication.

La figure 2 représente les éléments principaux du système d'affichage 10.

Comme déjà indiqué, le système d'affichage 10 comprend une source de lumière 11, un modulateur de lumière 12 (par exemple de type SLM pour *"Spatial Light Modulator"*) et un dispositif optique convergent, ici une lentille convergente 14.

On utilisera dans la suite de l'explication un repère orthonormé R (O, $u_x$, $u_y$, $u_z$), où O est le centre du modulateur de lumière 12, le vecteur $u_z$ est orthogonal au plan du modulateur de lumière 12 et dirigé dans le sens de propagation du faisceau lumineux généré par le modulateur de lumière 12, et les vecteurs $u_x$ et $u_y$ sont respectivement parallèles aux bords long et court du modulateur de lumière 12.

Comme visible sur la figure 2, l'axe optique Oz du système d'affichage 10 est l'axe colinéaire au vecteur $u_z$ passant par le point O.

Dans le système d'affichage 10, la lentille convergente 14 est placée perpendiculairement à l'axe optique de sorte que l'axe optique Oz passe par le centre $C_L$ de cette lentille convergente 14. Autrement dit, l'axe de la lentille convergente 14 est confondu avec (ou identique à) l'axe optique Oz.

Le plan d'extension du modulateur de lumière 12 et le plan d'extension de la lentille convergente 14 sont ainsi parallèles.

On note d la distance séparant le plan image (c'est-à-dire, dans le mode de réalisation de la figure 2, le plan du modulateur de lumière 12) et la lentille convergente 14 (c'est-à-dire ici d = $OC_L$).

Un rayon lumineux émis perpendiculairement au modulateur de lumière 12, et donc incident sur la lentille convergente 14 selon l'axe de cette lentille convergente 14, sera donc transmis (après traversée de la lentille convergente 14) en direction du point focal A (situé sur l'axe optique Oz). On note f la distance focale de la lentille convergente 14 : f = $AC_L$.

Comme représenté sur la figure 2, le faisceau lumineux généré par le modulateur de lumière 12 présente une ouverture angulaire $\omega$ (variable selon le type de modulateur de lumière 12 utilisé).

On représente par ailleurs par un disque $\delta$ la pupille de l'utilisateur qui observe le faisceau lumineux généré par le modulateur de lumière 12 après traversée de la lentille convergente 14. Comme expliqué ci-dessous, le disque $\delta$ correspondant à la pupille de l'utilisateur est placé entre la lentille convergente 14 et le point focal A.

On considère que ce disque $\delta$ (c'est-à-dire la pupille de l'utilisateur) est perpendiculaire à l'axe optique Oz et centré sur l'axe optique Oz. On considère ici en outre que le disque $\delta$ est situé sur l'axe optique Oz au point le plus proche du centre $C_L$ de la lentille convergente 14 qui reçoive des rayons lumineux issus de l'ensemble du modulateur de lumière 12. Autrement dit, comme visible sur la figure 2, on considère le disque $\delta$ placé au point de l'axe optique Oz le plus proche de la lentille convergente 14 touché par un rayon émis avec un angle égal à l'ouverture angulaire $\omega$ depuis un pixel périphérique du modulateur de lumière 12.

Cette situation du disque $\delta$ (c'est-à-dire la pupille de l'utilisateur) est optimale au sens où elle permet de maximiser le champ de vision pour l'utilisateur tout en permettant que celui-ci voit l'ensemble de l'hologramme formé par le faisceau lumineux.

Comme visible en figure 2, on note $d_1$ la distance entre la lentille convergente 14 et le disque $\delta$ représentant la pupille de l'utilisateur.

La figure 3 représente une possibilité de réalisation du système d'affichage 10 selon laquelle on utilise une technique de filtrage dite 4F pour supprimer un rayon symétrique généré par le modulateur de lumière 12.

Selon cette technique, on prévoit en aval du modulateur de lumière 12 un ensemble optique comprend un obturateur 20 interposé entre deux lentilles 16, 18.

Les deux lentilles 16, 18 ont une distance focale F identique et l'obturateur 20 est séparé de chacune des deux lentilles 16, 18 d'une distance égale à la distance focale F.

Le modulateur de lumière 12 est lui-même placé en amont, à une distance égale à la distance focale F, de la première lentille 16.

Le système d'affichage 10 comprend ainsi successivement, selon l'axe optique Oz et avec un espacement égal à la distance focale F entre deux éléments successifs : le modulateur de lumière 12, la première lentille 16, l'obturateur 20, la seconde lentille 18 et un plan image I.

L'obturateur 20 arrête les rayons lumineux intersectant un demi-plan donné et laisse passer les rayons lumineux situés dans le demi-plan complémentaire de sorte qu'au niveau du plan image I est généré un faisceau lumineux correspondant au faisceau généré par le modulateur de lumière 12, mais avec suppression d'une partie des composantes spatiales fréquentielles.

On pourra se référer à l'article *"Band-limited zone plates for single-sideband holography"*, de Y. Takaki et Y. Tanemoto, in Appl. Opt. 48, H64-H70 (2009) pour plus de détails sur cette technique de filtrage.

Dans cet exemple de réalisation, la distance d mentionnée plus haut est donc égale à la distance entre le plan image I et la lentille convergente 14, comme indiqué sur la figure 3.

L'obturateur 20 peut être fixe (auquel cas le demi-plan d'arrêt des rayons lumineux est constant). En variante, on peut utiliser (en tant qu'obturateur 20) un modulateur transmissif afin de choisir pour chaque trame le demi-plan dans lequel les rayons sont arrêtés.

On note dans la suite $\theta_0$ l'angle formé, dans le plan de l'obturateur 20, entre un bord de l'obturateur 20 et la direction Ox de sorte que, pour un point M de coordonnées (x, y, z) dans le repère R et situé dans le plan de l'obturateur 20, les coordonnées cylindriques $(\rho, \theta, h)$ de M sont telles que $\rho = SQRT(x^2+y^2)$, $\theta = atan2(y,x)$, $z = h$ et le point M est situé dans le demi-plan de l'obturateur 20 si et seulement si

$$\theta_0 < \theta < \theta_0+\pi$$

(où SQRT est la fonction racine carrée).

La valeur de l'angle $\theta_0$ est fixe lorsque l'obturateur 20 est fixe, ou variable (d'une trame à l'autre) lorsque la position de l'obturateur est réglable (par utilisation d'un modulateur transmissif comme indiqué ci-dessus).

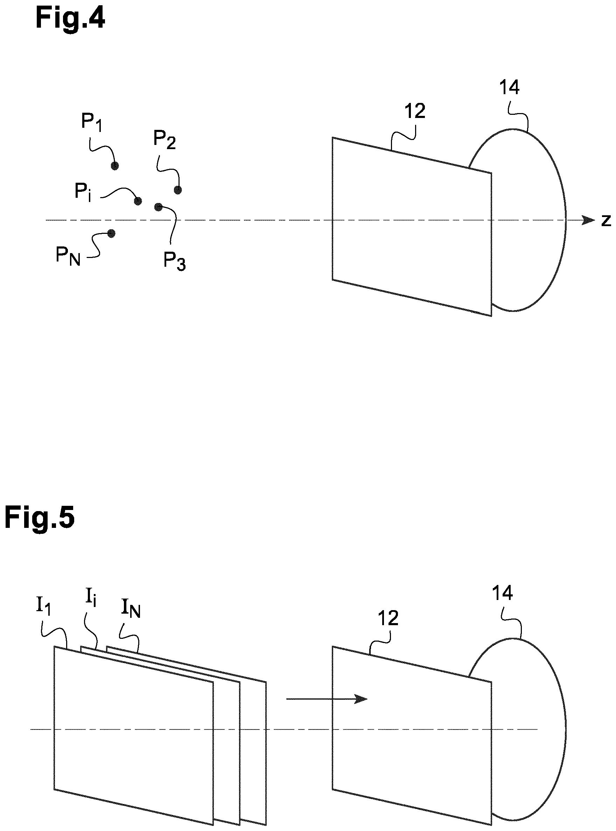

On décrit à présent en référence à la figure 4 la construction d'un hologramme numérique H destiné à être affiché au moyen du système d'affichage 10 à partir d'éléments lumineux situés en différents points $P_1$, $P_2$, $P_3$, $P_i$, $P_N$ (ici en N différents points) d'une scène à représenter. On note $A_i$ l'intensité lumineuse de l'élément lumineux situé au point $P_i$.

Les coordonnées $(x_i, y_i, z_i)$ des points $P_i$ et l'intensité lumineuse $A_i$ des éléments lumineux situés aux points $P_i$ sont ici mémorisés dans la mémoire 6.

On décrit ici la construction de l'hologramme numérique H pour une trame. Cette construction peut être répétée pour d'autres trames lorsque la scène est modifiée.

Lorsque l'orientation de l'obturateur 20 est réglable, le module de construction 2 détermine tout d'abord l'orientation de l'obturateur 20 (c'est-à-dire l'angle $\theta_0$ précité) en fonction de la répartition des éléments lumineux dans des secteurs angulaires définis autour de l'axe optique Oz du système d'affichage 10.

En pratique, on utilise un nombre k prédéterminé de secteurs angulaires et une fonction S(n) qui indique le nombre de points $P_i$ dans le secteur angulaire d'indice n (avec n compris entre 1 et k) :

$$S(n) = card\ \{P_i \mid 2\pi.(n-1)/k \leq \theta(P_i) < 2\pi.n/k\},$$

où $\theta(P_i)$ est la seconde coordonnée cylindrique du point $P_i$ : $\theta(P_i) = atan2(y_i,x_i)$.

En définissant $X_\theta$ comme une variable aléatoire de densité de probabilité S(n) après normalisation, le module de construction 2 peut choisir une réalisation m de la variable aléatoire $X_\theta$ (par simulation par un procédé pseudo-aléatoire, par exemple en se ramenant à une loi de probabilité uniforme) et déterminer ainsi l'angle $\theta_0$ :

$$\theta_0 = (2m+1).\pi/k.$$

Le module de construction 2 procède alors à la construction de l'hologramme numérique H. Pour ce faire, les opérations qui suivent sont mises en œuvre pour chaque pixel $p_{k,l}$ d'indices k, l du modulateur de lumière 12.

On note dans la suite $(x_{k,l}, y_{k,l}, z_{k,l})$ les coordonnées du pixel $p_{k,l}$ dans le repère R et $(\rho_{k,l}, \theta_{k,l}, h_{k,l})$ les coordonnées cylindriques associées : $\rho_{k,l} = SQRT(x_{k,l}^2+y_{k,l}^2)$, $\theta = atan2(y_{k,l},x_{k,l})$, $z_{k,l} = h_{k,l}$.

Pour chaque point $P_i$ de la scène, le module de construction 2 peut ainsi déterminer la distance $d_{i,k,l}$ entre le point $P_i$ et le pixel $p_{k,l}$, et le champ $c_{i,k,l}$ généré, au niveau du pixel $p_{k,l}$, par l'élément lumineux situé au point $P_i$ :

$$d_{i,k,l} = SQRT((x_{k,l}-x_i)^2+(y_{k,l}-y_i)^2+(z_{k,l}-z_i)^2)$$

$$c_{i,k,l} = 0 \text{ si } \theta_0 < \theta_{k,l} < \theta_0+\pi$$

$$c_{i,k,l} = Ai.exp(2\pi.j.d_{i,k,l}/\lambda)$$

sinon,

où exp est la fonction exponentielle, $\lambda$ la longueur d'onde de la lumière utilisée et j l'unité imaginaire : $j^2 = -1$.

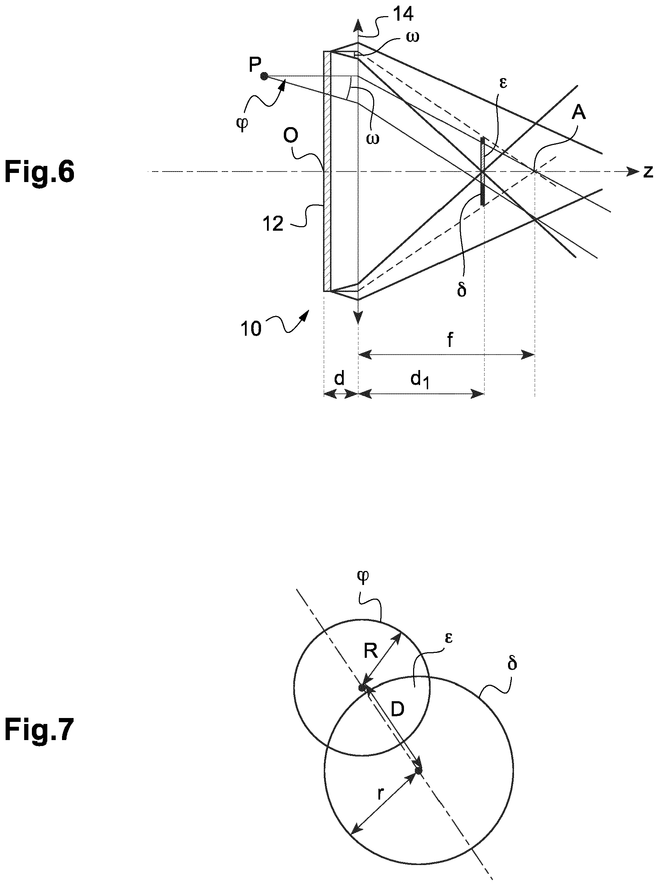

Le module de construction 2 pondère alors la contribution $c_{i,k,l}$ de l'élément lumineux situé au point $P_i$ (contribution $c_{i,k,l}$ au champ telle qu'elle vient d'être déterminée) par un coefficient de correction $\psi(P_i)$ calculé comme décrit plus bas en référence aux figures 6 et 7 pour tenir compte du fait que seule une partie de la pupille de l'utilisateur (représentée par le disque $\delta$) reçoit le faisceau lumineux généré par le modulateur de lumière 12 (comme expliqué ci-dessous en référence à la figure 6).

La contribution pondérée $c'_{i,k,l}$ ainsi obtenue vaut ainsi :

$$c'_{i,k,l} = \psi(P_i).c_{i,k,l}\ .$$

Le module de construction 2 peut alors déterminer le champ $F_{k,l}$ produit au niveau du pixel $p_{k,l}$ par l'ensemble des N points $P_i$ en sommant les contributions pondérées $c'_{i,k,l}$ des différents points $P_i$ déterminées ci-dessus :

$$F_{k,l} = \sum_{1 \leq i \leq N} c'_{i,k,l}\ .$$

Le module de construction 2 peut donc déterminer la valeur $H_{k,l}$ de l'hologramme numérique H pour le pixel $p_{k,l}$: = $(F_{k,l} + A)^2$, où A est l'amplitude complexe de l'onde de référence.

En effectuant les opérations ci-dessous pour tous les pixels $p_{k,l}$, le module de construction 2 détermine ainsi les valeurs $H_{k,l}$ respectivement associées à ces pixels $p_{k,l}$ en sommant (comme expliqué ci-dessus) les contributions lumineuses $c_{i,k,l}$ respectivement produites par les éléments lumineux situés aux points $P_i$ avec pondération, pour chacune des contributions lumineuses $c_{i,k,l}$, par un coefficient de correction $\psi(P_i)$ dépendant du point $P_i$.

On décrit à présent en référence à la figure 5 la construction d'un hologramme numérique H destiné à être affiché au moyen du système d'affichage 10 à partir d'une répartition d'éléments lumineux dans un ensemble de N plans comprenant chacun une image $I_i$ (pour $1 \leq i \leq N$).

Ces N images $I_i$ sont respectivement situées dans des plans d'équation $z = z_{i-1}$, le modulateur de lumière 12 étant situé dans le plan d'équation $z = z_N$ (avec $z_N = 0$).

Le contenu des images $I_i$ (défini par les contributions lumineuses, ici l'amplitude $I_i(x,y)$ de l'onde lumineuse, au niveau des points de coordonnées $(x,y)$ du plan concerné d'équation $z = z_{i-1}$) est ici mémorisé dans la mémoire 6.

Dans l'exemple décrit, la mémoire 6 mémorise également des masques binaires $O_i$ définissant les occultations respectivement dans les plans d'équation $z = z_i$ (pour $0 \leq i \leq N-1$).

On décrit ici la construction de l'hologramme numérique H pour une trame. Cette construction peut être répétée pour d'autres trames lorsque la scène est modifiée.

Lorsque l'orientation de l'obturateur 20 est réglable, le module de construction 2 détermine tout d'abord l'orientation de l'obturateur 20 (c'est-à-dire l'angle $\theta_0$ précité) en fonction de la répartition des points passants (points de valeur 1) des masques binaires d'occultation $O_i$ dans des secteurs angulaires définis autour de l'axe optique Oz du système d'affichage 10.

Comme dans le cas du mode de réalisation décrit ci-dessus en référence à la figure 4, on utilise un nombre k prédéterminé de secteurs angulaires. On note ici S' l'ensemble des points de l'espace associés à un pixel de valeur 1 dans un masque d'occultation Oi : S' = {P(x,y,z) | il existe i tel que $z = z_i$ et $O_i(x,y) = 1$}.

On peut alors ici également utiliser une fonction S(n) qui indique le nombre de points de l'ensemble S' dans le secteur angulaire d'indice n (avec n compris entre 1 et k) :

$$S(n) = \text{card } \{P \in S' \mid 2\pi.(n-1)/k \leq \theta(P) < 2\pi.n/k\},$$

où $\theta(P)$ est la seconde coordonnée cylindrique du point $P(x,y,z)$ : $\theta(P) = \text{atan2}(y,x)$.

En définissant $X_\theta$ comme une variable aléatoire de densité de probabilité S(n) après normalisation, le module de construction 2 peut choisir une réalisation m de la variable aléatoire $X_\theta$ (par simulation par un procédé pseudo-aléatoire, par exemple en se ramenant à une loi de probabilité uniforme) et déterminer ainsi l'angle $\theta_0$ :

$$\theta_0 = (2m+1).\pi/k.$$

Le module de construction 2 calcule ensuite successivement les différents champs $C'_i$ présents respectivement au niveau des plans d'équation $z = z_i$ (pour i compris entre 0 et N) par propagation d'un plan à un plan adjacent comme décrit à présent (et représenté schématiquement au moyen d'une flèche en figure 5).

Le module de construction 2 effectue pour ce faire les opérations suivantes pour chaque plan (en commençant par le plan le plus éloigné du modulateur de lumière 12, d'équation $z = z_0$, et en se rapprochant du modulateur de lumière 12), c'est-à-dire pour i allant de 0 à N-1 :

- le module de construction 2 applique au champ propagé $C_i$ le masque binaire $O_i$ définissant les occultations dans le plan $z = z_i$, ajoute la contribution de l'image $I_{i+1}$ située dans le plan $z = z_i$, et applique un masque de compensation $\psi_i$ défini plus bas, par exemple comme suit pour les points $(x,y,z_i)$ concernés :

$$C'_i(x,y,z_i) = [I_{i+1}(x,y)+O_i(x,y).C_i(x,y,z_i)].\psi_i(x,y) \ ;$$

- le module de construction 2 propage le champ C' ainsi obtenu jusqu'au plan adjacent (d'équation $z = z_{i+1}$) au moyen d'un opérateur de propagation $T_{zi}$ :

$$C_{i+1} = T_{zi}(C'_i).$$

L'opérateur de propagation $T_{zi}$ est ici défini comme suit :

$$[T_{zi}(C'_i)](x',y',z_{i+1}) = \sum_x \sum_y K_{\theta_0}(x,x',y,y',z_i,z_{i+1}).C'_i(x,y,z_i).\Delta x.\Delta y$$

où $\Delta x$ et $\Delta y$ correspondent aux pas de discrétisation de l'opérateur (respectivement selon la direction Ox et selon la direction Oy) et $K_{\theta_o} = \xi.\Gamma_{\theta_o}$ , les fonctions $\xi$ et $\Gamma_{\theta_o}$ étant définies comme suit :

$$\xi(x,x',y,y',z,z') = K(x,x',y,y',z,z') \text{ si } y' < y$$

$$\xi(x,x',y,y',z,z') = 0 \text{ si } y' \geq y$$

$$\Gamma_{\theta_o}(x,x',y,y',z,z')=(\cos\theta_0.x-\sin\theta_0.y,\cos\theta_0.x'-\sin\theta_0.y',\sin\theta_0.x+\cos\theta_0.y,$$

$$\sin\theta_0.x'+\cos\theta_0.y',z,z').$$

Le masque de compensation $\psi_i$ est un masque matriciel dont les éléments sont respectivement associés aux différents points du plan d'équation $z = z_i$. Ce masque matriciel $\psi_i$ vise à compenser le fait que seule une partie de la pupille de l'utilisateur (représentée par le disque $\delta$) reçoit le faisceau lumineux généré par le modulateur de lumière 12 (comme expliqué ci-dessous en référence à la figure 6)

Chaque élément est donc un coefficient de correction $\psi(x,y,z_i)$ qui dépend du point concerné, de coordonnées $(x,y,z_i)$ dans le plan d'équation z = zi, de manière analogue à ce qui a été mentionné ci-dessus dans le cadre du mode de réalisation de la figure 4. Autrement dit, on a : $\psi_i(x,y) = \psi(x,y,z_i)$ (le calcul du coefficient de correction étant décrit ci-après en référence aux figures 6 et 7).

On obtient ainsi, après propagation au sein des différents plans, le champ $C_N$ présent au niveau du plan d'équation $z = z_N$ (plan du modulateur de lumière 12).

Le module de construction 2 peut donc déterminer l'hologramme numérique H pour les différents points du modulateur de lumière comme suit :

$$H = (C_N + A)^2,$$

où A est l'amplitude complexe de l'onde de référence.

On décrit à présent en référence à la figure 6 la détermination du coefficient de correction $\psi$ visant à compenser le fait que seule une partie de la pupille de l'utilisateur (représentée par le disque $\delta$) reçoit le faisceau lumineux généré par le modulateur de lumière 12.

Comme exposé ci-dessus, on cherche à déterminer la valeur du coefficient de correction $\psi$ associée à un point P de l'espace de coordonnées $(x,y,z)$ (cette valeur étant notée $\psi(P)$ dans le cadre de la figure 4 et $\psi(x,y,z)$ dans le cadre de la figure 5).

On a ainsi représenté sur la figure 6 un pinceau lumineux $\varphi$ issu du point P concerné et ayant une ouverture angulaire $\omega$ correspondant à l'ouverture angulaire du modulateur de lumière 12. Cette ouverture angulaire $\omega$ est donc ici

constante (quel que soit le pixel concerné du modulateur de lumière 12, et donc de l'hologramme numérique H).

Le pinceau lumineux φ est transmis en sortie du modulateur de lumière 12 (avec son rayon central perpendiculaire au plan du modulateur de lumière 12), puis à travers la lentille convergente 14 (avec son rayon central dirigé en conséquence en direction du point focal A).

Comme expliqué plus haut, le disque δ (correspondant à la pupille de l'utilisateur) est placé de sorte qu'une partie au moins du pinceau lumineux φ croise le disque δ.

On a représenté sur la figure 7 le disque δ, le pinceau lumineux φ et leur intersection ε dans le plan du disque δ (plan d'équation z = d+$d_1$).

L'aire α de l'intersection ε du disque δ et du pinceau φ vaut :

$$\alpha = R^2.(\beta - 0,5.\sin \beta) + r^2.(\sigma - 0,5.\sin \sigma)$$

avec

$$\beta = \arccos[(R^2 + D^2 - r^2)/(2.R.D)]$$

$$\sigma = \arccos[(r^2 + D^2 - R^2)/(2.r.D)]$$

où (comme visible en figure 7) r est le rayon du disque δ, R le rayon de l'intersection du pinceau lumineux φ et du plan du disque δ, et D la distance entre le centre du pinceau lumineux φ et le centre du disque δ (c'est-à-dire la distance entre le rayon central du pinceau lumineux φ et l'axe Oz au niveau du plan du disque δ), et on a donc :

$$D = \rho.(f-d_1)/f \text{ (en considérant le caractère rectiligne du rayon central précité)}$$

et

$$R = [(1-[d-z]/f).d_1+d-z].\tan \omega,$$

avec ρ la distance du point P à l'axe Oz (ou première coordonnée polaire du point P) : $\rho = SQRT(x^2+y^2)$ et z est la troisième coordonnée cartésienne du point P.

On utilise par exemple en pratique pour le rayon r du disque δ une valeur moyenne généralement rencontrée du rayon de la pupille de l'œil humain, soit par exemple une valeur comprise entre 4 mm et 8 mm, ici 6 mm.

On rappelle par ailleurs que f, d, $d_1$ et ω sont des caractéristiques du système d'affichage 10 présentées ci-dessus en référence à la figure 2.

Le module de construction 2 peut ainsi déterminer (au moyen des formules ci-dessus) l'aire α de l'intersection ε en fonction des coordonnées (x,y,z) du point P concerné.

Le module de construction 2 peut déterminer sur cette base la valeur du coefficient de correction ψ associée au point P de coordonnées (x,y,z) :

$$\Psi(P) = \pi.r^2/\alpha(x,y,z).$$

Ce coefficient de correction Ψ(P) est inversement proportionnel à la proportion du disque δ (correspondant à la pupille de l'utilisateur) recevant le pinceau lumineux φ de sorte qu'en pondérant une contribution lumineuse reçue du point P par ce coefficient de correction Ψ(P) comme proposé plus haut, on compense le fait que seule cette proportion de la pupille de l'utilisateur (représentée par le disque δ) reçoit ce pinceau lumineux φ.

Bien entendu, diverses autres modifications peuvent être apportées à l'invention dans le cadre des revendications annexées.

**Revendications**

1. Procédé de construction d'un hologramme numérique (H) représentant une scène et destiné à être affiché au moyen d'un système d'affichage (10) comprenant un modulateur de lumière (12) produisant un faisceau lumineux et un dispositif optique convergent (14) conçu pour faire converger le faisceau lumineux vers un point focal (A),

la scène étant définie par un ensemble d'éléments lumineux,
**caractérisé en ce qu'**il comprend une étape de détermination de valeurs respectivement associées à des pixels de l'hologramme numérique (H) en sommant des contributions lumineuses respectivement produites par des éléments lumineux avec pondération, pour chacune des contributions lumineuses, par un coefficient de correction dépendant de l'aire de l'intersection ($\varepsilon$) d'une surface ($\delta$) située entre le dispositif optique convergent (14) et le point focal (A), et d'un pinceau lumineux ($\varphi$) ayant une ouverture angulaire ($\omega$) prédéterminée et transmis à travers le dispositif optique convergent (14) depuis l'élément lumineux produisant la contribution lumineuse concernée.

2. Procédé selon la revendication 1, dans lequel les éléments lumineux sont respectivement situés sur une pluralité de points ($P_i$) de la scène et dans lequel le procédé comprend, pour chaque point ($P_i$) de ladite pluralité, une étape de calcul, en fonction de la position du point concerné, du coefficient de correction pondérant les contributions lumineuses produites par l'élément lumineux situé au point concerné ($P_i$).

3. Procédé selon la revendication 2, dans lequel l'étape de détermination de valeurs comprend, pour chaque pixel de l'hologramme numérique (H), une étape de détermination du champ généré, au niveau du pixel concerné, par un élément lumineux situé à un point donné ($P_i$) et une étape de pondération du champ déterminé par le coefficient de correction calculé pour le point donné ($P_i$).

4. Procédé selon la revendication 1, dans lequel les éléments lumineux sont situés dans au moins un plan.

5. Procédé selon la revendication 4, dans lequel l'étape de détermination de valeurs comprend une étape de propagation du champ lumineux d'un premier plan à un second plan adjacent au premier plan, avec application d'un masque matriciel dont les éléments sont respectivement associés aux différents points du premier plan et ont une valeur dépendant de l'aire de l'intersection de ladite surface et d'un pinceau lumineux ayant l'ouverture angulaire prédéterminée et transmis à travers le dispositif optique convergent depuis le point associé à l'élément concerné.

6. Procédé selon l'une des revendications 1 à 5, comprenant une étape d'affichage, au moyen du système d'affichage (10), de l'hologramme numérique (H) construit.

7. Procédé selon l'une des revendications 1 à 6, dans lequel le système d'affichage (10) comprend un obturateur (20) interposé entre deux lentilles (16, 18).

8. Procédé selon la revendication 7, dans lequel l'orientation de l'obturateur (20) est déterminée en fonction de la répartition des éléments lumineux dans des secteurs angulaires définis autour de l'axe (Oz) du système d'affichage (10).

9. Procédé selon la revendication 8, la revendication 7 étant prise dans la dépendance de la revendication 3, dans lequel le champ déterminé est nul si le pinceau lumineux ($\varphi$) émis par l'élément lumineux situé au point donné ($P_i$) avec ladite ouverture angulaire ($\omega$) prédéterminée est entièrement intercepté par l'obturateur (20).

10. Procédé selon l'une des revendications 7 à 9, dans lequel les deux lentilles (16, 18) ont une distance focale identique et dans lequel l'obturateur (20) est séparé de chacune des deux lentilles d'une distance (F) égale à la distance focale.

11. Procédé selon l'une des revendications 1 à 10, dans lequel ladite surface ($\delta$) est un disque centré sur l'axe optique ($C_L z$) du dispositif optique convergent (14).

12. Procédé selon l'une des revendications 1 à 11, dans lequel l'ouverture angulaire ($\omega$) prédéterminée est l'ouverture angulaire du faisceau lumineux généré par le modulateur de lumière (12).

13. Système d'holographie numérique comprenant un module de construction (2) d'un hologramme numérique (H) représentant une scène et destiné à être affiché au moyen d'un système d'affichage (10) comprenant un modulateur de lumière (12) produisant un faisceau lumineux, et un dispositif optique convergent (14) conçu pour faire converger le faisceau lumineux vers un point focal (A), la scène étant définie par un ensemble d'éléments lumineux,
**caractérisé en ce que** le module de construction (2) est conçu pour déterminer des valeurs respectivement associées à des pixels de l'hologramme numérique (H) en sommant des contributions lumineuses respectivement produites par des éléments lumineux avec pondération, pour chacune des contributions lumineuses, par un coefficient de correction dépendant de l'aire de l'intersection ($\varepsilon$) d'une surface ($\delta$) située entre le dispositif optique convergent (14) et le point focal (A), et d'un pinceau lumineux ($\varphi$) ayant une ouverture angulaire ($\omega$) prédéterminée et transmis à travers le dispositif optique convergent (14) depuis l'élément lumineux produisant la contribution lumineuse concernée.

**14.** Système d'holographie selon la revendication 13, comprenant en outre ledit système d'affichage (10).

**Patentansprüche**

**1.** Verfahren zum Erzeugen eines digitalen Hologramms (H), das eine Szene darstellt und dazu bestimmt ist, mittels eines Anzeigesystems (10) angezeigt zu werden, das einen einen Lichtstrahl erzeugenden Lichtmodulator (12) und eine optische Konvergenzvorrichtung (14), die dazu ausgelegt ist, den Lichtstrahl zu einem Brennpunkt (A) konvergieren zu lassen, aufweist,

wobei die Szene durch eine Gesamtheit von Leuchtelementen definiert ist, **dadurch gekennzeichnet, daß** es einen Schritt des Bestimmens von jeweils mit den Bildpunkten des Hologramms verbundenen Werten aufweist, indem es durch die Leuchtelemente jeweils erzeugte Leuchtbeiträge für jeden der Leuchtbeiträge mit einer Gewichtung durch einen Korrekturkoeffizienten summiert, der von der Schnittfläche ($\varepsilon$) einer zwischen der optischen Konvergenzvorrichtung (14) und dem Brennpunkt (A) gelegenen Oberfläche ($\delta$) mit einem feinen Lichtstrahl ($\varphi$) mit einer vorbestimmten winkelmäßigen Öffnung ($\omega$), der vom den betreffenden Leuchtbeitrag erzeugenden Leuchtelement aus durch die optische Konvergenzvorrichtung übertragen wird, abhängt.

**2.** Verfahren gemäß Anspruch 1, bei dem die Leuchtelemente jeweils auf einer Anzahl Punkte ($P_i$) der Szene angeordnet sind und bei dem das Verfahren für jeden Punkt ($P_i$) der besagten Anzahl in Abhängigkeit von der Position des betreffenden Punkts einen Schritt des Berechnens des Korrekturkoeffizienten, der die vom am betreffenden Punkt (Pi) angeordneten Leuchtelement erzeugten Leuchtbeiträge wichtet, aufweist.

**3.** Verfahren gemäß Anspruch 2, bei dem der Schritt des Bestimmens von Werten für jeden Bildpunkt des digitalen Hologramms (H) einen Schritt des Bestimmens des am betreffenden Bildpunkt durch ein an einem gegebenen Punkt ($P_i$) angeordnetes Leuchtelement erzeugten Felds und einen Schritt der Gewichtung des bestimmten Felds durch den für den gegebenen Punkt ($P_i$) berechneten Korrekturkoeffizienten aufweist.

**4.** Verfahren gemäß Anspruch 1, bei dem die Leuchtelemente auf mindestens einer Ebene angeordnet sind.

**5.** Verfahren gemäß Anspruch 4, bei dem der Schritt des Bestimmens von Werten einen Schritt des Ausbreitens des Leuchtfelds von einer ersten Ebene auf eine an die erste Ebene angrenzende zweite Ebene unter Anwendung einer Matrixmaske aufweist, deren Elemente jeweils den verschiedenen Punkten der ersten Ebene zugeordnet sind und einen Wert haben, der von der Schnittfläche der besagten Oberfläche mit einem feinen Lichtstrahl mit der vorbestimmten winkelmäßigen Öffnung, der vom dem betreffenden Element zugehörigen Punkt aus durch die optische Konvergenzvorrichtung übertragen wird, abhängt.

**6.** Verfahren gemäß einem der Ansprüche 1 bis 5 mit einem Schritt des Anzeigens des erzeugten digitalen Hologramms (H) mittels des Anzeigesystems (10).

**7.** Verfahren gemäß einem der Ansprüche 1 bis 6, bei dem das Anzeigesystem (10) eine zwischen zwei Linsen (16, 18) angeordnete Blende (20) aufweist.

**8.** Verfahren gemäß Anspruch 7, bei dem die Ausrichtung der Blende (20) in Abhängigkeit von der Verteilung der Leuchtelemente in um die Achse (Oz) des Anzeigesystems (10) definierten Winkelbereichen bestimmt wird.

**9.** Verfahren gemäß Anspruch 8, wobei der Anspruch 7 in Abhängigkeit vom Anspruch 3 genommen wird, bei dem das bestimmte Feld Null ist, wenn der vom am gegebenen Punkt (Pi) angeordneten Leuchtelement mit der vorbestimmten winkelmäßigen Öffnung ($\omega$) ausgesandte Lichtstrahl ($\varphi$) von der Blende (20) vollständig erfaßt wird.

**10.** Verfahren gemäß einem der Ansprüche 7 bis 9, bei dem die beiden Linsen (16, 18) eine identische Brennweite haben und bei dem die Blende (20) von jeder der beiden Linsen durch einen der Brennweite gleichen Abstand (F) getrennt ist.

**11.** Verfahren gemäß einem der Ansprüche 1 bis 10, bei dem die Oberfläche (δ) eine auf die optische Achse (C$_L$z) der optischen Konvergenzvorrichtung (14) zentrierte Scheibe ist.

**12.** Verfahren gemäß einem der Ansprüche 1 bis 11, bei dem die vorbestimmte winkelmäßige Öffnung (ω) die winkelmäßige Öffnung des vom Lichtmodulator (12) erzeugten Lichtstrahls ist.

**13.** Digitales holographisches System umfassend ein Modul (2) zum Erzeugen eines digitalen Hologramms (H), das eine Szene darstellt und dazu bestimmt ist, mittels eines Anzeigesystems (10) angezeigt zu werden, das einen einen Lichtstrahl erzeugenden Lichtmodulator (12) und eine optische Konvergenzvorrichtung (14), die dazu ausgelegt ist, den Lichtstrahl auf einen Brennpunkt (A) konvergieren zu lassen, aufweist, wobei die Szene durch eine Gesamtheit von Leuchtelementen definiert ist,
**dadurch gekennzeichnet, daß** das Erzeugungsmodul (2) dazu ausgelegt ist, jeweils Bildpunkten des digitalen Hologramms (H) zugeordnete Werte zu bestimmen, indem durch Leuchtelemente jeweils erzeugte Lichtbeiträge für jeden der Lichtbeiträge mit Gewichtung durch einen Korrekturkoeffizienten, der von der Schnittfläche (ε) einer zwischen der optischen Konvergenzvorrichtung (14) und dem Brennpunkt (A) gelegenen Oberfläche (δ) mit einem feinen Lichtstrahl (φ) mit einer vorbestimmten winkelmäßigen Öffnung (ω), der vom den betreffenden Leuchtbeitrag erzeugenden Leuchtelement aus durch die optische Konvergenzvorrichtung (14) übertragen wird, abhängt, summiert werden.

**14.** Holographisches System gemäß Anspruch 13, das außerdem das Anzeigesystem (10) aufweist.

**Claims**

**1.** A method for constructing a digital hologram (H) representing a scene and intended to be displayed by means of a display system (10) comprising a light modulator (12) producing a light beam and a converging optical device (14) designed to make the light beam converge towards a focal point (A),

the scene being defined by a set of luminous elements,
**characterised in that** it comprises a step of determining values respectively associated with pixels of the digital hologram (H) by summing light contributions respectively produced by luminous elements with weighting, for each of the light contributions, by a correction coefficient depending on the area of the intersection (ε) of a surface (δ) located between the converging optical device (14) and the focal point (A), and a pencil of light (φ) having a predetermined angular aperture (ω) and transmitted through the converging optical device (14) from the luminous element producing the concerned light contribution.

**2.** A method according to claim 1, wherein the luminous elements are located on a plurality of points (P$_i$) of the scene, respectively, and wherein the method comprises, for each point (P$_i$) of said plurality, a step of calculating, as a function of the position of the concerned point, the correction coefficient weighting the light contributions produced by the luminous element located at the concerned point (P$_i$).

**3.** A method according to claim 2, wherein the step of determining values comprises, for each pixel of the digital hologram (H), a step of determining the field generated, at the concerned pixel, by a luminous element located at a given point (P$_i$) and a step of weighting the determined field by the correction coefficient calculated for the given point (P$_i$).

**4.** A method according to claim 1, wherein the luminous elements are located in at least one plane.

**5.** A method according to claim 4, wherein the step of determining values comprises a step of propagating the light field from a first plane to a second plane adjacent to the first plane, with application of a matrix mask whose elements are respectively associated with the different points of the first plane and have a value depending on the area of the intersection of said surface and a pencil of light having the predetermined angular aperture and transmitted through the converging optical device from the point associated with the concerned element.

**6.** A method according to one of claims 1 to 5, comprising a step of displaying the constructed digital hologram (H), by means of the display system (10).

**7.** A method according to one of claims 1 to 6, wherein the display system (10) comprises a shutter (20) interposed between two lenses (16, 18).

8. A method according to claim 7, wherein the orientation of the shutter (20) is determined as a function of the distribution of the luminous elements in angular sectors defined about the axis (Oz) of the display system (10).

9. A method according to claim 8, claim 7 being taken as depending on claim 3, wherein the determined field is zero if the pencil of light ($\varphi$) emitted by the luminous element located at the given point ($P_i$) with said predetermined angular aperture ($\omega$) is entirely intercepted by the shutter (20).

10. A method according to one of claims 7 to 9, wherein the two lenses (16, 18) have a same focal distance and wherein the shutter (20) is separated from each of the two lenses by a distance (F) equal to the focal distance.

11. A method according to one of claims 1 to 10, wherein said surface ($\delta$) is a disk centred on the optical axis ($C_Lz$) of the converging optical device (14).

12. A method according to one of claims 1 to 11, wherein the predetermined angular aperture ($\omega$) is the angular aperture of the light beam generated by the light modulator (12).

13. A digital holography system comprising a module (2) for constructing a digital hologram (H) representing a scene and intended to be displayed by means of a display system (10) comprising a light modulator (12) producing a light beam, and a converging optical device (14) designed to make the light beam converge towards a focal point (A), the scene being defined by a set of luminous elements,
**characterized in that** the construction module (2) is designed to determine values respectively associated with pixels of the digital hologram (H) by summing light contributions respectively produced by luminous elements with weighting, for each of the light contributions, by a correction coefficient depending on the area of the intersection ($\varepsilon$) of a surface ($\delta$) located between the converging optical device (14) and the focal point (A), and a pencil of light ($\varphi$) having a predetermined angular aperture ($\omega$) and transmitted through the converging optical device (14) from the luminous element producing the concerned light contribution.

14. A holography system according to claim 13, further comprising said display system (10).

**Fig.1**

**Fig.2**

**Fig.3**

# Fig.4

# Fig.5

**Fig.6**

**Fig.7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013250049 A1

**Littérature non-brevet citée dans la description**

- **ANTONIN GILLES et al.** Real-time layer-based computer-generated hologram calculation for the Fourier transform optical system. *Applied Optics*, 10 October 2018, vol. 57, 8508-8517

- **Y. TAKAKI** ; **Y. TANEMOTO**. Band-limited zone plates for single-sideband holography. *Appl. Opt.*, 2009, vol. 48, H64-H70